# EUROPEAN PATENT APPLICATION

(11) **EP 3 534 228 A1**
(43) Date of publication of application: **04.09.2019**
(21) Application number: 18211319.1
(22) Date of filing: 10.12.2018
(51) Int. Cl.: G05B 19/05, H04L 9/08, H04L 29/06

(54) **DATA PROCESSING METHOD, CONTROL SYSTEM, AND CONTROL DEVICE**

(30) Priority: 28.02.2018 JP 2018034695
(71) Applicant: OMRON Corporation, Shiokoji-dori, Shimogyo-Ku Kyoto-shi Kyoto 600-8530 (JP)
(72) Inventor: HIROTA, Takuya, Kyoto-shi, Kyoto 600-8530 (JP)
(74) Representative: Becker Kurig Straus

(57) **Abstract**

A technology for preventing leakage of data in a control device (100) that controls a control subject is provided. A method includes a step (Sa2) of generating, using a control device (100), a private key and a public key, a step (Sa10, Sa104) of acquiring, using the control device (100); encrypted data obtained by encrypting the data using the public key; a step (Sa204) of decrypting, using the control device (100), the private key for the encrypted data when the control device (100) performs a process; a step (Sa206) of storing, using the control device (100), the data obtained by decrypting the encrypted data using the private key in a volatile storage area that is not accessible from the outside; and a step (Sa208, Sa210) of executing, using the control device (100), a process with reference to the data stored in the storage area.

## Description

### BACKGROUND

### Technical Field

The disclosure relates to a method of processing data that is provided from a support device in a control device configured to control a control subject, a control system including a control device and a support device configured to provide data to the control device, and a control device configured to control a control subject using data that is provided from a support device.

### Description of Related Art

In various production fields, a factory automation (FA) technology using a control device such as a programmable controller (PLC) is widely used. Along with the development of information and communication technology (ICT) in recent years, in control devices in such FA fields, not only conventional sequence programs, but also various application programs have been executed.

Execution of a program in such a control device is completed in a preset task cycle. However, in recent years, execution of a program has been completed over a plurality of task cycles.

For example, Japanese Unexamined Patent Application Publication No. 2012-194663 (Patent Document 1) discloses a CPU part of a PLC that controls a control subject by executing a program. The CPU part is configured to, when it is not possible to complete execution of a program in a control cycle, execute an unexecuted part of the program in the next control cycle.

### Patent Documents

[Patent Document 1] Japanese Laid-open No. 2012-194663

### SUMMARY

### Problems to be Solved

As described above, when a control device that executes a program over a plurality of task cycles is provided, various programs are used for the control device. For example, not only a binary format program that a computer can process but also an interpreter format program that allows a computer to directly understand and process source code created by humans can be used for a control device. Use of such an interpreter format program in a control device is very convenient for a user. However, since the source code is directly stored in the control device, countermeasures with respect to leakage to the outside is important.

An objective of the disclosure is to provide a technology for preventing leakage of data in a control device that controls a control subject.

### Means for Solving the Problems

According to an embodiment of the disclosure, there is provided a method of processing data that is provided from a support device in a control device configured to control a control subject. A method includes a step of generating, using a control device, a private key and a public key; a step of acquiring, using the control device, encrypted data obtained by encrypting the data using the public key; a step of decrypting, using the control device, the encrypted data using the private key when the control device performs a process; a step of storing, using the control device, the data obtained by decrypting the encrypted data using the private key in a volatile storage area and which is not accessible from the outside; and a step of executing, using the control device, a process with reference to the data stored in the storage area.

According to this disclosure, since data provided from the support device is encrypted using the public key generated by the control device, it is possible to prevent the data provided from the support device from being leaked to the outside directly. In addition, when the control device performs a process, since the control device decrypts the encrypted data using the private key generated by the control device and the control device stores the decrypted data in an inaccessible volatile storage area, it is possible to prevent the decrypted data from being leaked to the outside.

In the above-described disclosure, the encrypted data is generated when the control device encrypts the data provided by the support device using the public key. The acquisition step includes a step of acquiring the encrypted data generated by the control device

According to this disclosure, since the control device alone encrypts data provided from the support device, it is not necessary to transfer the public key generated by the control device to the outside, and it is possible to prevent leakage of data without complicating the processes.

In the above-described disclosure, the encrypted data is generated when the support device encrypts the data using the public key. The acquisition step includes acquiring the encrypted data transferred by the support device.

According to this disclosure, since the support device that provides data transfers data that is encrypted to the control device, it is possible to prevent data from being leaked along a transfer path, and it is possible to further strengthen prevention of data leakage.

In the above-described disclosure, when at least one of conditions including transfer of the data from the outside, reception of an instruction from the outside, and activation of the control device is established, the control device performs the generation step.

According to this disclosure, the control device can generate a private key and a public key at an appropriate timing.

In the above-described disclosure, the method includes a step of newly generating, using the control device, a new key pair including a private key and a public key when an old key pair including the public key and the private key are already stored; a step of decrypting, using the control device, the encrypted data obtained by encryption using the public key of the old key pair using the private key of the old key pair; a step of encrypting, using the control device, the data obtained by decryption using the private key of the old key pair using the public key of the new key pair; a step of storing, using the control device, the encrypted data obtained by encryption using the public key of the new key pair; and a step of deleting, using the control device, the old key pair.

According to this disclosure, since the control device can exchange a key pair used for encryption and decryption of data, it is possible to further strengthen prevention of data leakage.

In the above-described disclosure, the method includes a step of generating, using the control device, a new key pair including a private key and a public key when an old key pair including the public key and the private key are already stored; a step of decrypting, using the control device, at least one encrypted data item among a plurality of encrypted data items obtained by encryption using the public key of the old key pair using the private key of the old key pair; a step of encrypting, using the control device, the data obtained by decryption using the private key of the old key pair using the public key of the new key pair; a step of storing, using the control device, the encrypted data obtained by encryption using the public key of the new key pair; and a step of deleting, using the control device, the old key pair when all of the plurality of encrypted data items obtained by encryption using the public key of the old key pair are encrypted using the public key of the new key pair.

According to this disclosure, since the control device can exchange a key pair used for encryption and decryption of a plurality of data items, it is possible to further strengthen prevention of data leakage.

In the above-described disclosure, the method includes a step of deleting, using the control device, an item corresponding to encrypted data obtained by encryption using the public key of the new key pair from a list in which items corresponding to the plurality of encrypted data items obtained by encryption using the public key of the old key pair are summarized; and a step of deleting, using the control device, the list when all of the plurality of encrypted data items obtained by encryption using the public key of the old key pair are encrypted using the public key of the new key pair and thus all of the items are deleted.

According to this disclosure, when the list is used, the control device can exchange a key pair without excess or deficiency. In addition, even if the key exchange is temporarily interrupted, when the list is used, the control device can exchange a key pair in a state during interruption.

In the above-described disclosure, the control device generates the private key and the public key using a value that varies depending on an environment in the control device when the private key and the public key are generated.

According to this disclosure, since the control device can generate a private key and a public key using a value that is not reproducible, it is possible to further strengthen prevention of data leakage.

In the above-described disclosure, the control device stores hash values for the data in association with the encrypted data corresponding to the data.

According to this disclosure, when the hash values associated with encrypted data are verified, since it is possible to verify data without decrypting encrypted data, a time required for verification can be shortened.

In the above-described disclosure, the data is source code of a program with which the control device controls the control subject.

According to this disclosure, it is possible to prevent interpreter format data such as a program source code from being leaked to the outside.

According to another embodiment of the disclosure, there is provided a control system including a control device configured to control a control subject and a support device configured to provide data to the control device. The control device includes a generation part configured to generate a private key and a public key; an acquisition part configured to acquire encrypted data obtained by encrypting the data using the public key; a decryption part configured to decrypt the encrypted data using the private key during processing; a storage part configured to store the data obtained by decryption using the private key for the encrypted data in a volatile storage area that is not accessible from the outside; and an execution part configured to perform a process with reference to the data stored in the storage area.

According to this disclosure, since data provided from the support device is encrypted using the public key generated by the control device, it is possible to prevent the data provided from the support device from being leaked to the outside directly. In addition, when the control device performs a process, since the control device decrypts the encrypted data using the private key generated by the control device and the control device stores the decrypted data in an inaccessible volatile storage area, it is possible to prevent the decrypted data from being leaked to the outside.

According to still another embodiment of the disclosure, there is provided a control device configured to control a control subject using data that is provided from a support device. The control device includes a generation part configured to generate a private key and a public key; an acquisition part configured to acquire encrypted data obtained by encrypting the data using the public key; a decryption part configured to decrypt the encrypted data using the private key during processing; a storage part configured to store the data obtained by decryption using the private key for the encrypted data in a volatile storage area that is not accessible from the outside; and an execution part configured to perform a process with reference to the data stored in the storage area.

According to this disclosure, since data provided from the support device is encrypted using the public key generated by the control device, it is possible to prevent the data provided from the support device from being leaked to the outside directly. In addition, when the control device performs a process, since the control device decrypts the encrypted data using the private key generated by the control device and the control device stores the decrypted data in an inaccessible volatile storage area, it is possible to prevent the decrypted data from being leaked to the outside.

According to the disclosure, it is possible to provide a technology for preventing leakage of data in a control device that controls a control subject.

### BRIEF DESCRIPTION OF THE DRAWINGS

FIG. 1 is a schematic diagram showing an overview of a method of processing data that is provided from a support device in a control device according to the present embodiment.
FIG. 2 is a schematic diagram showing an overall configuration example of a control system according to the present embodiment.
FIG. 3 is a block diagram showing a hardware configuration example of the control device according to the present embodiment.
FIG. 4 is a block diagram showing a hardware configuration example of the support device according to the present embodiment.
FIG. 5 is a timing chart for explaining an example of an execution timing of an application program with respect to a task cycle of a control program in the control device according to the present embodiment.
FIG. 6 is a functional block diagram showing various functions of the control system according to the present embodiment.
FIG. 7 is a functional block diagram for explaining a key generation process in the control system according to the present embodiment.
FIG. 8 is a functional block diagram for explaining an encryption process in a control system according to a first embodiment.
FIG. 9 is a sequence diagram for explaining an encryption process in the control system according to the first embodiment.
FIG. 10 is a functional block diagram for explaining an encryption process in a control system according to a second embodiment.
FIG. 11 is a functional block diagram for explaining an encryption process in a control system according to a third embodiment.
FIG. 12 is a sequence diagram for explaining an encryption process in a control system according to the third embodiment.
FIG. 13 is a functional block diagram for explaining a decryption process in the control system according to the present embodiment.
FIG. 14 is a sequence diagram for explaining a decryption process in the control system according to the present embodiment.
FIG. 15 is a functional block diagram for explaining a key exchange process in the control system according to the present embodiment.
FIG. 16 includes diagrams (A) to (D) for explaining an example of updating an old encrypted data list in the control system according to the present embodiment.
FIG. 17 is a flowchart for explaining a key exchange process in a control device according to the present embodiment.
FIG. 18 is a schematic diagram for explaining data verification in the control system according to the present embodiment.

### DESCRIPTION OF THE EMBODIMENTS

Embodiments of the disclosure will be described in detail with reference to the drawings. Here, the same or corresponding parts in the drawings will be denoted with the same reference numerals and descriptions thereof will not be repeated.

### <A. Application example>

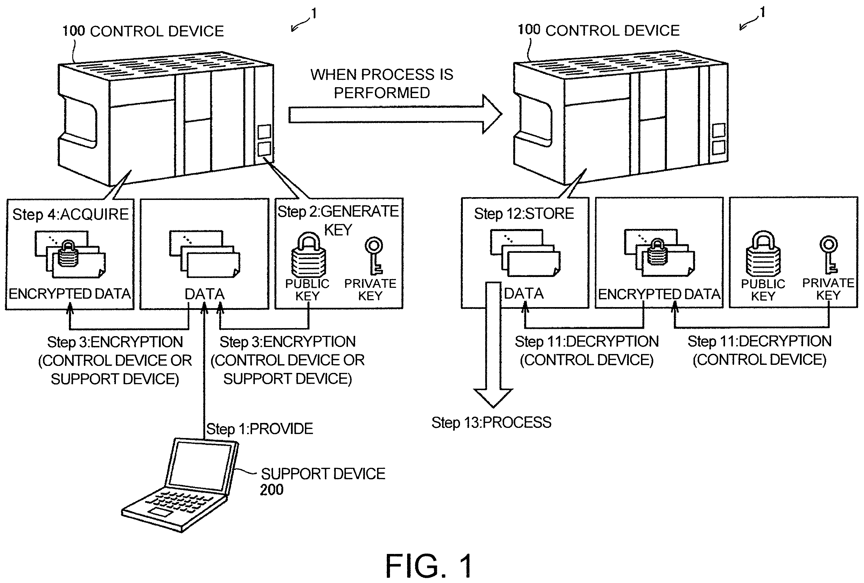

First, an example of a manner in which the disclosure is applied will be described with reference to FIG. 1. FIG. 1 is a schematic diagram showing an overview of a method of processing data provided from a support device in a control device according to the present embodiment. In the following description, a PLC (programmable controller) is mainly assumed as an example of a control device.

As shown in FIG. 1, a control system 1 according to the present embodiment includes a control device 100 and a support device 200. The control device 100 refers to data provided from the support device 200, performs a predetermined process, and thus controls a control subject. "Data" provided from the support device 200 includes programs, parameters and the like used for controlling a control subject. These data items are created by a user such as a designer for the control device 100.

The above program executed by the control device 100 includes a user program and a system program. The user program is a combination of instructions arbitrarily created according to a control subject and can be arbitrarily created and modified by a user. The user program typically includes source code composed of one or a plurality of instructions described according to the International Standard IEC 61131-3 defined by the International Electrotechnical Commission (IEC).

On the other hand, the system program is a program for realizing an execution environment in which a user program is executed and control hardware included in the control device 100. Basically, the system program is installed in the control device 100 in advance.

As the user program, there is a control program that is registered as a part of any task and is repeatedly executed in each task cycle which is a certain control cycle set for a task. In a certain task cycle, the control program is sequentially executed from the beginning to the end, and also in the next task cycle, the control program is sequentially executed from the beginning to the end.

In addition, as the user program, there is an application program that is executed when predetermined execution conditions are satisfied in a certain task cycle. In an application program, a process provided by the application program may not be completed in one task cycle. In such a case, a process is performed over a plurality of task cycles.

Since such an application program is an interpreter format program that a user can arbitrarily create and modify, source code thereof is directly stored in the control device 100. Therefore, when the source code leaks to the outside of the control device 100, data is easily used by outsiders.

In view of the above problems, the present embodiment provides a technology for preventing leakage of data in the control device 100 that controls a control subject. Specifically, in the present embodiment, when an encryption technology using a public key and a private key is applied to the control device 100 such as a PLC, leakage of a program is prevented. A technology for preventing leakage of data will be described below in detail.

First, a data encryption process will be described with reference to FIG. 1. As shown in FIG. 1, in a step 1, data (data such as programs and parameters) created by a user is provided from the support device 200 to the control device 100.

In a step 2, the control device 100 generates a set of a public key and a private key (hereinafter referred to as a "key pair"). Here, in order to generate a public key and a private key, a generally known technology may be used. However, for a factor used at that time, a value that varies depending on an environment in the control device 100 is preferably used. That is, when a public key and a private key are generated, a value that is not reproducible is preferably used. A public key and a private key are stored in a nonvolatile storage area in which data is retained even if power is not supplied.

In a step 3, data provided from the support device 200 is encrypted using the public key created by the control device 100. Here, the control device 100 may encrypt data provided from the support device 200 using a public key, or the support device 200 may encrypt data using a public key and then transfer the encrypted data to the control device 100. Here, a generally known technology may be used for encryption using a public key.

In a step 4, the control device 100 acquires and stores the encrypted data. The encrypted data is stored in a nonvolatile storage part.

In this manner, data provided from the support device 200 is encrypted by the control device 100 or the support device 200, and stored and retained by the control device 100.

Next, a process of decrypting encrypted data when the control device 100 performs a process will be described with reference to FIG. 1. As shown in FIG. 1, in a step 11, the control device 100 decrypts encrypted data retained in a nonvolatile storage part using a private key. Here, decryption using a private key may be performed using a generally known technology.

In a step 12, the control device 100 stores decrypted data. The decrypted data is stored in a volatile storage area in which storage cannot be maintained when power is not supplied which is a storage part and which is not accessible from the outside. "The outside" is an area in which data used for a process performed by the control device 100 is unknown and is generally assumed to be a device that is different from the support device 200 having a tool for creating the data.

In a step 13, the control device 100 refers to data stored in a volatile storage part, performs a process, and thus controls a control subject.

In this manner, the encrypted data is decrypted by the control device 100, and is used for a process when a control subject is controlled.

### <B. Overall configuration example of control system>

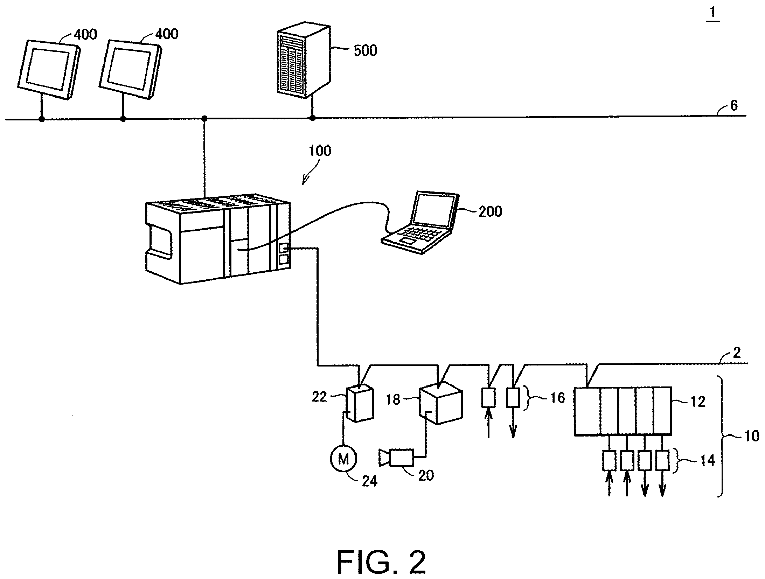

First, an overall configuration example of the control system 1 including the control device 100 according to the present embodiment will be described. FIG. 2 is a schematic diagram showing an overall configuration example of the control system 1 according to the present embodiment.

As shown in FIG. 2, the control device 100 which is a main component of the control system 1 executes a user program prepared in advance and thus controls any control subject. Specifically, the control device 100 cyclically executes a series of control processes such as collecting a measured value, a state value, and the like (hereinafter referred to as "input data") from a control subject, executing a control operation based on the collected input data, and outputting an instruction value and a state value (hereinafter referred to as "output data") obtained by execution of a control operation to the control subject.

FIG. 2 shows a configuration example in which the control device 100 is connected to one or a plurality of devices 10 via a field network 2. One or the plurality of devices 10 controls a control subject according to output data from the control device 100 and provides input data measured using the control subject to the control device 100. As an example, the device 10 includes a remote input/output (I/O) device 12, a relay group 14, an image sensor 18, a camera 20, a servo driver 22 and a servo motor 24.

Although not shown, the remote I/O device 12 includes a communication part configured to perform communication via the field network 2 and an input and output part (hereinafter referred to as an "I/O part") for acquiring input data and outputting output data.

The I/O part may be directly connected to the field network 2, and may be incorporated into a part of the control device 100. In the example shown in FIG. 2, an I/O part 16 is directly connected to the field network 2.

The image sensor 18 performs image measurement processing such as pattern matching on image data captured by the camera 20, and transmits the processing results to the control device 100. The servo driver 22 drives the servo motor 24 according to output data (for example, a position instruction) from the control device 100.

As the field network 2, a network through which a data arrival time is guaranteed and periodic communication is performed is preferably used. As a network through which such periodic communication is performed, EtherCAT (registered trademark), EtherNet/IP (registered trademark), DeviceNet (registered trademark), and CompoNet (registered trademark) are known.

The support device 200 for developing and debugging a user program may be connected to the control device 100. Functions provided by the support device 200 will be described below in detail.

The control device 100 is connected to a server device 500 and a display device 400 via a host network 6.

The server device 500 exchanges necessary data with the control device 100. The server device 500 has, for example, a database function, and may collect event logs and the like output from the control device 100 in time series.

The display device 400 receives an operation from a user, transmits a command or the like according to the user operation to the control device 100, and graphically displays the operation result in the control device 100.

### [<C. Hardware configuration examples of devices>

Next, hardware configuration examples of main devices constituting the control system 1 according to the present embodiment will be described.

### (c1: Hardware configuration example of control device 100)

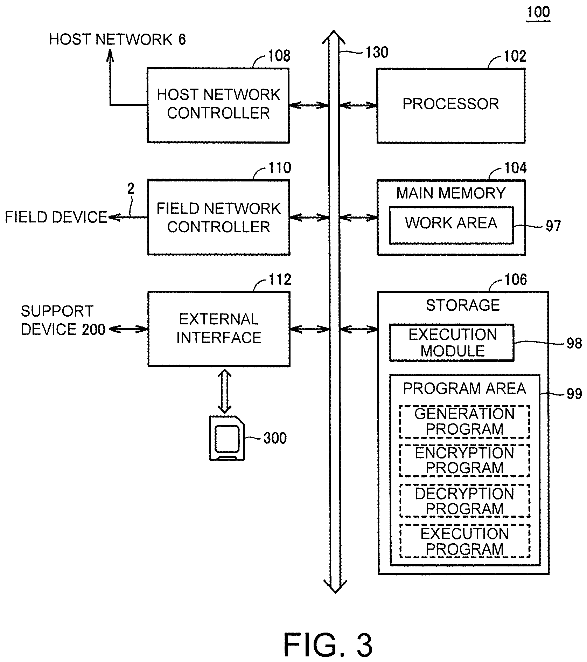

Next, a hardware configuration example of the control device 100 according to the present embodiment will be described. FIG. 3 is a block diagram showing a hardware configuration example of a control device according to the present embodiment.

As shown in FIG. 3, the control device 100 includes a processor 102, a main memory 104, a storage 106, a host network controller 108, a field network controller 110, and an external interface 112. These components are connected to each other via a processor bus 130.

The processor 102 corresponds to an operation part that executes a control operation and the like, and includes a central processing unit (CPU), a graphics processing unit (GPU), or the like. Specifically, the processor 102 reads a program stored in the storage 106, opens and executes a program in a work area 97 in the main memory 104, and thus implements control and a process according to a control subject.

The main memory 104 is constituted by a volatile storage device such as a dynamic random access memory (DRAM) and a static random access memory (SRAM). The storage 106 is constituted by a nonvolatile storage device, for example, a hard disk drive (HDD) and a solid state drive (SSD).

The storage 106 includes one or a plurality of execution modules 98 for implementing a user program and a program area 99 for storing various programs. For example, a generation program for generating a public key and a private key, an encryption program for encrypting data, a decryption program for decrypting encrypted data, an execution program for executing a process using data, and the like are stored in the program area.

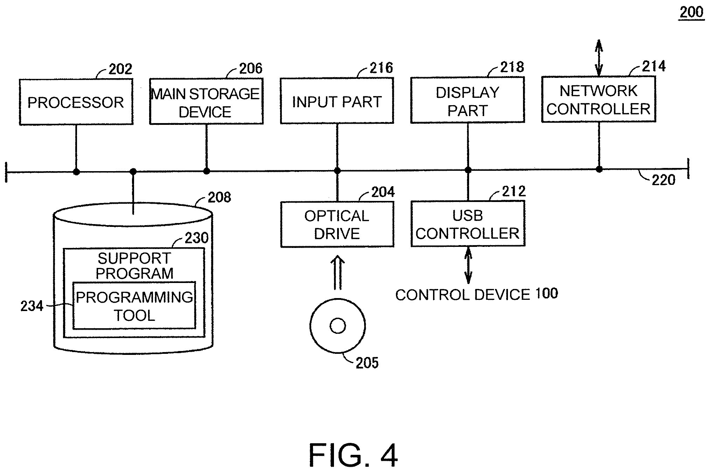

The host network controller 108 exchanges data with any information processing device such as the display device 400 and the server device 500 (refer to FIG. 4) via the host network 6.

The field network controller 110 exchanges data with a field device via the field network 2. The field network controller 110 functions as a communication master for performing periodic communication via the field network 2.

The external interface 112 is constituted by, for example, a universal serial bus (USB) controller, a memory card interface, or the like. The USB controller exchanges data with the support device 200 via a USB connection. In addition, the memory card interface receives an external storage 300 such as a memory card which is an example of a removable recording medium. The memory card interface can write data in the external storage 300 and read various data items (log and trace data) from the external storage 300.

In the example shown in FIG. 3, a configuration example in which the processor 102 executes a program and thus necessary functions are provided is shown. However, some or all of these functions provided may be implemented using a dedicated hardware circuit (for example, an application specific integrated circuit (ASIC) or a field-programmable gate array (FPGA)). Alternatively, a main part of the control device 100 may be realized using hardware (for example, an industrial personal computer based on a general purpose personal computer) according to a general purpose architecture. In this case, a plurality of operating systems (OSs) with different applications may operate in parallel using a virtualization technology, and necessary applications on each OS may be implemented. In addition, a configuration in which functions such as the display device 400 and the support device 200 are combined may be used in the control device 100.

### (c2: Hardware configuration example of support device 200)

Next, a hardware configuration example of the support device 200 according to the present embodiment will be described. FIG. 4 is a block diagram showing a hardware configuration example of the support device 200 according to the present embodiment.

As an example, the support device 200 according to the present embodiment may be realized by executing a program using hardware (for example, general purpose personal computer) according to a general purpose architecture.

As shown in FIG. 4, the support device 200 includes a processor 202 such as a CPU and an MPU, an optical drive 204, a main storage device 206, a storage 208, a USB controller 212, a network controller 214, an input part 216, and a display part 218. These components are connected to each other via a bus 220.

The processor 202 reads various programs stored in the storage 208, opens and executes them in the main storage device 206, and thus implements various processes.

The storage 208 is constituted by, for example, an HDD or an SSD. Typically, a support program 230 for creating a user program that is executed in the support device 200, debugging the created program, defining a system configuration, and setting various parameters is stored in the storage 208.

The support program 230 causes the support device 200 which is a computer to function as a device for generating an application program. More specifically, the support program 230 includes a programming tool 234 for realizing source code creating and editing process, and the like.

The support device 200 includes the optical drive 204, and, from a recording medium 205 (for example, an optical recording medium such as a digital versatile disc (DVD)) in which a computer readable program is non-transitorily stored, a program stored therein is read and installed in the storage 208, or the like.

Various programs executed in the support device 200 may be installed via the recording medium 205, but they may be installed in a form in which they are downloaded from a server device via a network. In addition, a function provided by the support device 200 according to the present embodiment may be realized in a form in which a part of a module that is provided by an OS is used.

The USB controller 212 controls exchange of data with the control device 100 via a USB connection. The network controller 214 controls exchange of data with other devices via any network.

The input part 216 is constituted by a keyboard, a mouse, and the like, and receives an operation performed by a user. The display part 218 is constituted by a display, various indicators, a printer, and the like, and outputs the processing results from the processor 202.

In the example shown in FIG. 4, a configuration example in which the processor 202 executes a program, and thus necessary functions are provided is shown. However, some or all of these functions provided may be implemented using a dedicated hardware circuit (for example, an ASIC or an FPGA).

### (c3: Hardware configuration example of server device 500)

As an example, the server device 500 constituting the control system 1 according to the present embodiment can be realized using a general purpose file server or database server. Since a hardware configuration of such a device is known, details thereof will not be described here.

### (c4: Hardware configuration example of display device 400)

The display device 400 constituting the control system 1 according to the present embodiment is called an HMI device, and may adopt a configuration implemented as a special purpose machine, and may be realized using hardware (for example, an industrial personal computer based on a general purpose personal computer) according to a general purpose architecture.

When the display device 400 is realized using an industrial personal computer based on a general purpose personal computer, the same hardware configuration as in the support device 200 shown in FIG. 4 described above is used. However, in the configuration example shown in FIG. 4, a program for implementing an HMI function is installed in the display device 400 instead of the support program 230.

### <D. Task cycle of control program and execution timing of application program>

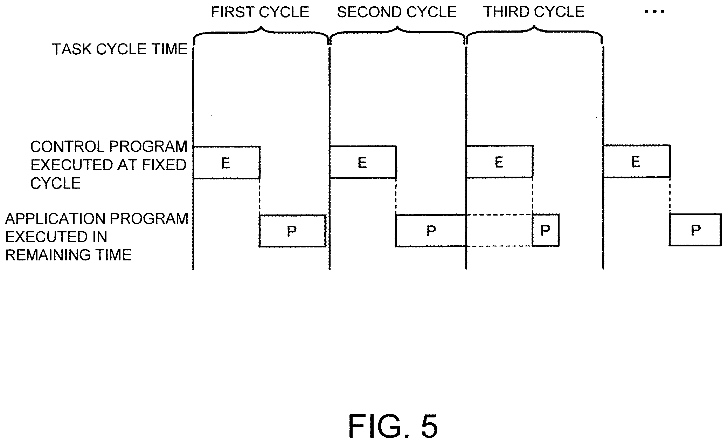

Next, an example of an execution timing of an application program with respect to a task cycle of a control program in the control device 100 according to the present embodiment will be described. FIG. 5 is a timing chart for explaining an example of an execution timing of an application program with respect to a task cycle of a control program in the control device 100 according to the present embodiment.

Here, in the example shown in FIG. 5, "E" indicates a time required for performing a process of a control program executed at fixed time intervals, and "P" indicates a time required for executing an application program called in a task.

As shown in FIG. 5, a control program is repeatedly executed for each certain task cycle. In each task cycle, the control program is executed from the beginning to the end. After execution of the control program executed at fixed time intervals in this manner is completed, the application program is executed using the remaining time within one task cycle. In addition, when execution of the application program is not completed in the remaining time within one task cycle, the application program is executed over a plurality of task cycles.

For example, in the example shown in FIG. 5, execution of the application program is completed within one task cycle in the first cycle, but execution of the application program is not completed within one task cycle in the second cycle. In this case, an unexecuted part of the application program is executed within one task cycle in the next third cycle.

In this manner, the application program included in data that is provided from the support device 200 to the control device 100 is executed over one or a plurality of task cycles using the remaining time after the control program that is repeatedly executed in each task cycle is executed and thereby realizes a process for the control device 100 to control a control subject.

### <E. Functional configuration example of control system>

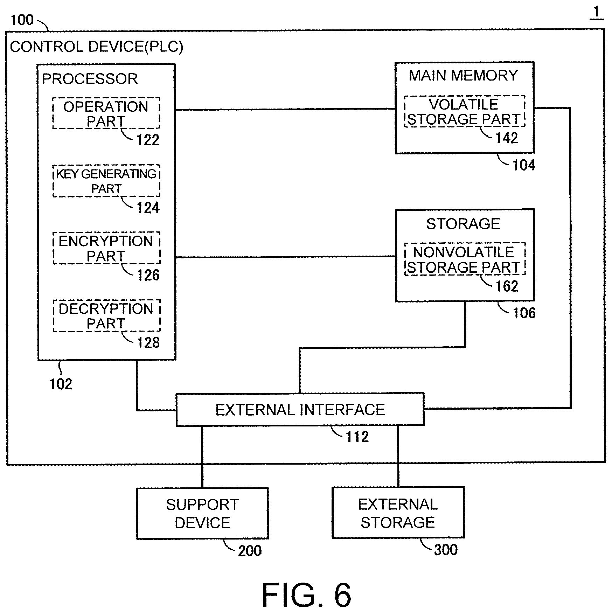

Next, a functional configuration of the control system 1 according to the present embodiment will be described. FIG. 6 is a functional block diagram showing various functions of the control system 1 according to the present embodiment. Here, in FIG. 6, a functional configuration related to a technology for preventing leakage of data that is provided from the support device 200 to the control device 100 will be specifically described.

As shown in FIG. 6, the processor 102 of the control device 100 includes an operation part 122, a key generating part 124, an encryption part 126, and a decryption part 128 as main functional parts. The main memory 104 of the control device 100 includes a volatile storage part 142 configured to store information in a volatile storage area as a main functional part. The storage 106 of the control device 100 includes a nonvolatile storage part 162 configured to store information in a nonvolatile storage area as a main functional part.

The processor 102, the main memory 104, and the storage 106 are connected to the support device 200 and the external storage 300 via the external interface 112.

### <F. Processes of control system>

Next, processes performed by the control system 1 will be described.

### (f1: Key generation process)

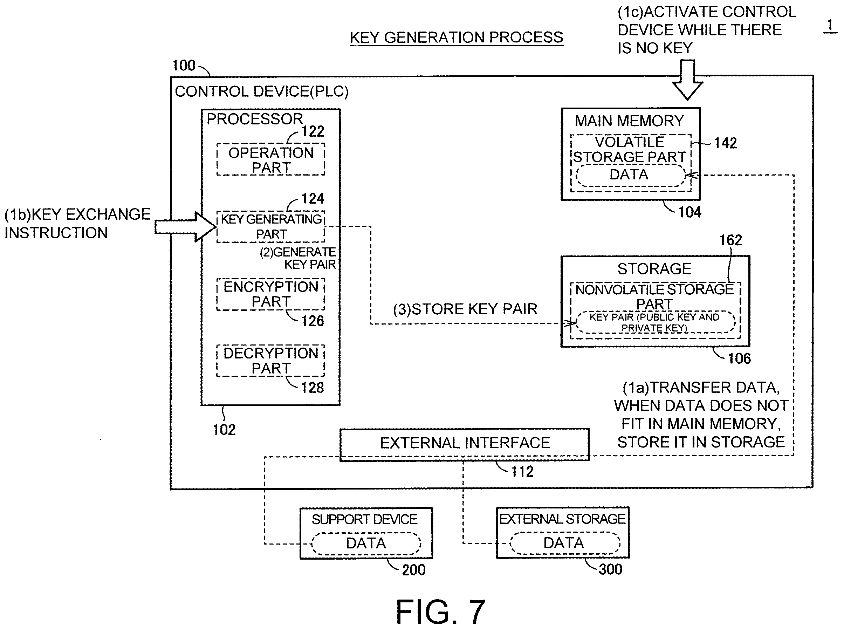

First, a key generation process of the control system 1 will be described. FIG. 7 is a functional block diagram for explaining a key generation process of a control system according to the present embodiment. Here, in FIG. 7, and FIG. 8, FIG. 10, FIG. 11, FIG. 13, and FIG. 15 to be described below, examples of the order of processes executed in processes are indicated by parenthesized numbers, for example, "(1)," "(2)," "(3),"...

As shown in FIG. 7, when a condition for generating a key is satisfied, the control device 100 generates a key pair which is a set of a public key and a private key. As conditions for generating a key, a condition that data is transferred from the outside to the main memory 104 of the control device 100 via the external interface 112 (1a), a condition that an instruction to exchange a key is received (1b), and a condition that the control device 100 is activated while there is no key (1c) are assumed.

The data transfer (1a) assumes that new data such as application programs and parameters is registered in the control device 100 when the control device 100 is produced or in a mass production process. In addition, data may be transferred to the control device 100 from the support device 200 via the external interface 112 and may be read from the external storage 300 to the control device 100 via the external interface 112.

Data transferred from the outside is stored in the volatile storage part 142 of the main memory 104. Therefore, in a time period during which the control device 100 does not operate, power is not supplied to the main memory 104, and thus data in the volatile storage area is deleted. Accordingly, it is possible to prevent leakage of data. Here, when data does not fit in the main memory 104, it may be temporarily stored in the storage 106.

The key exchange instruction (1b) assumes that the control device 100 has received an instruction to exchange a key according to a user operation while a key pair already exists.

The activating of the control device 100 (1c) assumes activation when the control device 100 is shipped from the factory or setting is reset.

When any one process among the above (1a), (1b), and (1c) is performed, the control device 100 generates a new key pair by the key generating part 124 of the processor 102 (2).

In the generation of a key pair (2), at the time of generating a key pair, the control device 100 generates a key pair using a value that varies depending on an environment in the control device 100. That is, when a key pair is generated, the control device 100 uses a value that is not reproducible. Specifically, the control device 100 generates a key pair using factors that are not reproducible such as information about components constituting the control device 100, current values of various sensors, self-diagnosis data (for example, a current value of an internal circuit, a temperature of an internal element, other environment noise data, and statistical information about device usage), and a current value of the nonvolatile storage 106. Accordingly, it is possible to further strengthen prevention of data leakage.

When a key pair is generated, the control device 100 stores the key pair in the nonvolatile storage part 162 of the storage 106.

In this manner, when at least one of conditions including transfer of data from the support device 200 or the external storage 300, reception of an instruction from the outside, and activation of the control device 100 is satisfied, the control device 100 can generate a new key pair.

### (f2: Encryption process according to first embodiment)

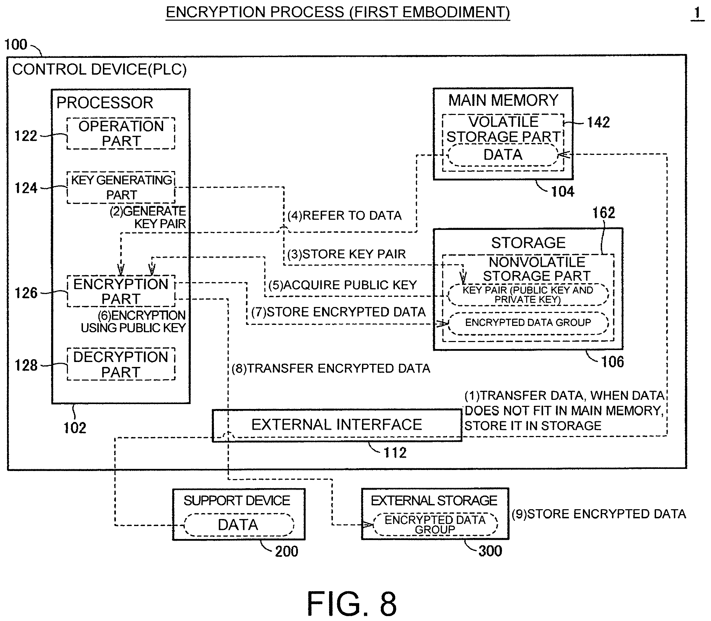

Next, an encryption process according to the first embodiment within the encryption process according to the present embodiment will be described. FIG. 8 is a functional block diagram for explaining an encryption process of the control system 1 according to the first embodiment.

As shown in FIG. 8, first, data is transferred from the support device 200 to the main memory 104 of the control device 100 via the external interface 112 (1). The data transferred from the support device 200 is stored in the volatile storage part 142 of the main memory 104. Here, when data does not fit in the main memory 104, it may be temporarily stored in the storage 106.

When data is transferred from the support device 200, the control device 100 generates a key pair (2). Here, the generation of a key pair is a process corresponding to generation of a key pair (2) after the process of (1a) shown in FIG. 7.

When a key pair is generated, the control device 100 stores the key pair in the nonvolatile storage part 162 of the storage 106 (3).

The control device 100 refers to data stored in the main memory 104 by the encryption part 126 of the processor 102 (4). In addition, the control device 100 acquires a public key among key pairs stored in the storage 106 by the encryption part 126 of the processor 102 (5). Then, the control device 100 encrypts data using the public key by the encryption part 126 of the processor 102 (6).

The control device 100 stores encrypted data obtained by encryption in the nonvolatile storage part 162 of the storage 106 (7). Here, one or a plurality of encrypted data items are stored in the storage 106. In addition, the control device 100 transfers encrypted data to the external storage 300 via the external interface 112 (8). The external storage 300 stores the encrypted data transferred from the control device 100 (9). Here, one or a plurality of encrypted data items are stored in the external storage 300.

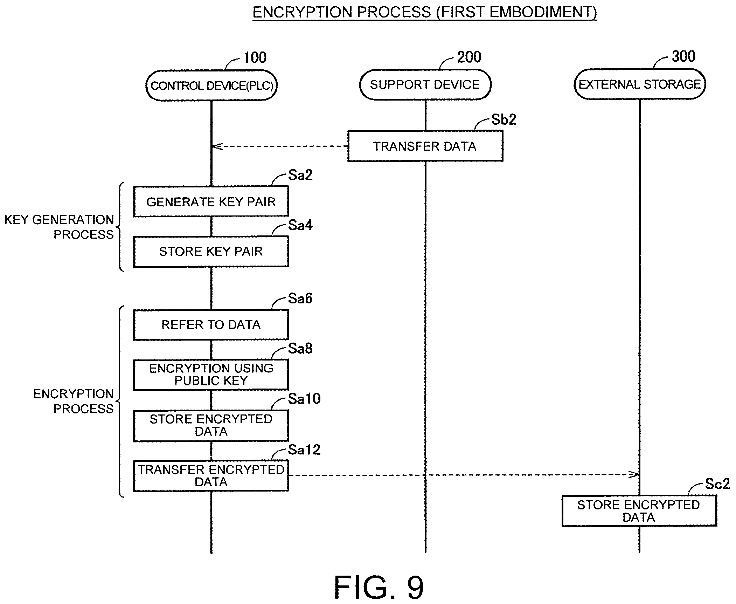

The encryption process according to the first embodiment described above is summarized in a sequence diagram shown in FIG. 9. FIG. 9 is a sequence diagram for explaining an encryption process of the control system 1 according to the first embodiment.

As shown in FIG. 9, when data is transferred from the support device 200 (Sb2), the control device 100 generates a key pair (Sa2), and stores the generated key pair in a nonvolatile storage area of the storage 106 (Sa4).

Next, the control device 100 refers to data stored in the main memory 104 (Sa6). Then, the control device 100 encrypts the data using a public key among key pairs stored in the storage 106 (Sa8).

The control device 100 stores encrypted data obtained by encryption in a nonvolatile storage area of the storage 106 (Sa10), and transfers the encrypted data to the external storage 300 via the external interface 112 (Sa12). The external storage 300 stores the encrypted data transferred from the control device 100 (Sc2).

In this manner, the control device 100 encrypts data provided from the support device 200 and can store the encrypted data in the nonvolatile storage 106 or the external storage 300.

### (f3: Encryption process according to second embodiment)

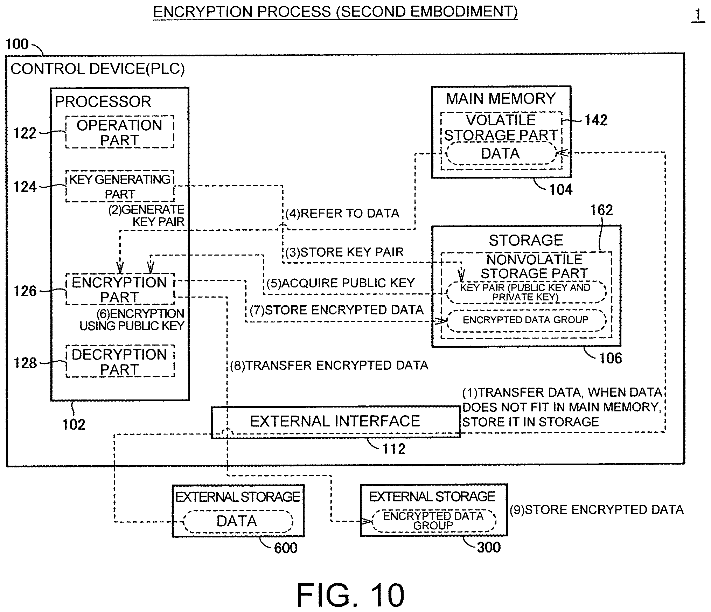

Next, an encryption process according to the second embodiment within the encryption process according to the present embodiment will be described. FIG. 10 is a functional block diagram for explaining an encryption process of the control system 1 according to the second embodiment.

An encryption process according to the second embodiment shown in FIG. 10 is an example in which data provided from the support device 200 is stored in an external storage 600 and is different from the encryption process according to the first embodiment shown in FIG. 8 only in that data is transferred from the external storage 600 to the main memory 104 of the control device 100 via the external interface 112, and the rest of the process is the same as the example shown in FIG. 8. Therefore, no further details will be described. Here, the external storage 600 may be a storage common to the external storage 300 or a storage separate from the external storage 300.

### (f4: Encryption process according to third embodiment)

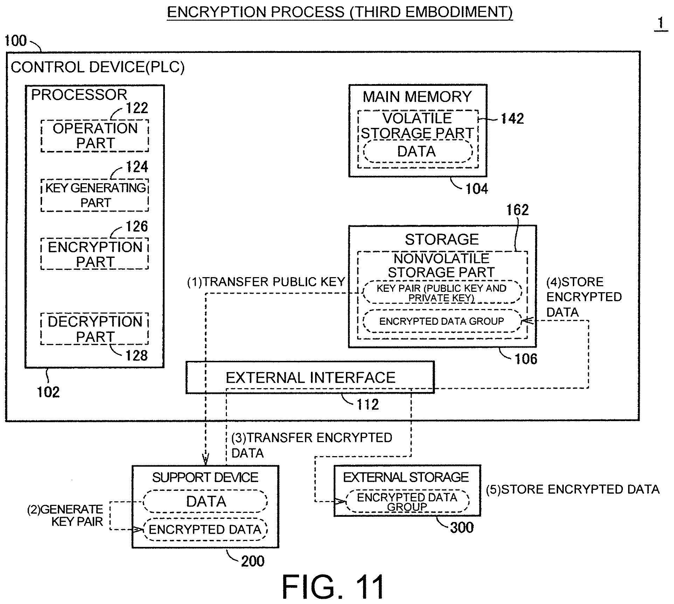

Next, an encryption process according to the third embodiment within the encryption process according to the present embodiment will be described. FIG. 11 is a functional block diagram for explaining an encryption process of the control system 1 according to the third embodiment.

An encryption process according to the third embodiment shown in FIG. 11 is different from the encryption process according to the first embodiment shown in FIG. 8 and the encryption process according to the second embodiment shown in FIG. 10 in that the support device 200 encrypts data and then transfers the encrypted data to the control device 100. Details will be described below.

As shown in FIG. 11, the control device 100 transfers a public key among key pairs stored in the storage 106 to the support device 200 via the external interface 112 (1). The support device 200 encrypts data using the public key (2).

The support device 200 transfers encrypted data obtained by encryption to the storage 106 of the control device 100 and the external storage 300 via the external interface 112 (3).

The control device 100 stores the encrypted data in the nonvolatile storage part 162 of the storage 106 (4). In addition, also in the external storage 300, the encrypted data is stored (5).

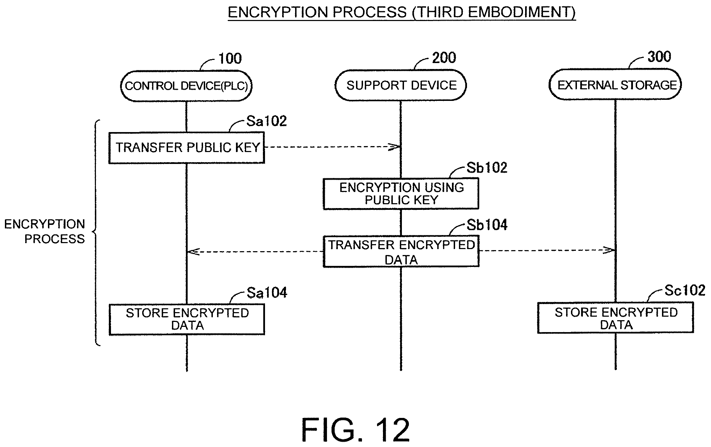

The encryption process according to the third embodiment described above is summarized in a sequence diagram shown in FIG. 12. FIG. 12 is a sequence diagram for explaining an encryption process of the control system 1 according to the third embodiment.

As shown in FIG. 12, the control device 100 transfers a public key among key pairs stored in the storage 106 to the support device 200 via the external interface 112 (Sa102).

On the other hand, the support device 200 encrypts data using the public key (Sb102). Then, the support device 200 transfers encrypted data obtained by encryption to the storage 106 of the control device 100, and the external storage 300 via the external interface 112 (Sb104).

On the other hand, the control device 100 stores the encrypted data in the storage 106 (Sa104). In addition, as in the external storage 300, the encrypted data is stored (Sc102).

In this manner, data provided from the support device 200 is encrypted and then transferred to the storage 106 of the control device 100 and the external storage 300, and the encrypted data is stored in the storage 106 or the external storage 300.

### (f5: decryption process)

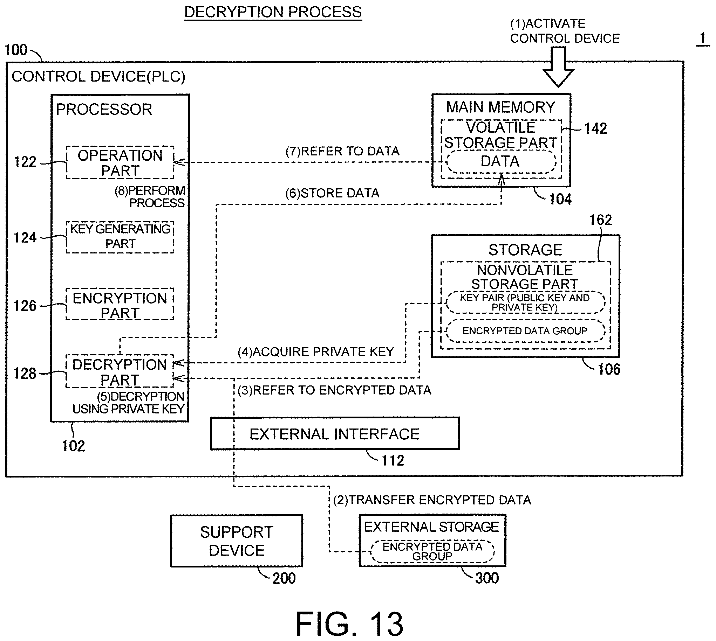

Next, a decryption process according to the present embodiment will be described. FIG. 13 is a functional block diagram for explaining a decryption process of the control system 1 according to the present embodiment.

As shown in FIG. 13, when the control device 100 is activated (1), encrypted data stored in the external storage 300 is transferred to the control device 100 via the external interface 112 (2). The control device 100 refers to encrypted data stored in the storage 106 or encrypted data transferred from the external storage 300 by the decryption part 128 of the processor 102 (3).

In addition, the control device 100 acquires a private key among key pairs stored in the storage 106 by the decryption part 128 of the processor 102 (4).

The control device 100 decrypts the encrypted data with a private key (5). Then, the control device 100 stores data obtained by decrypting in the volatile storage part 142 of the main memory 104 (6).

The control device 100 refers to data stored in the main memory 104 by the operation part 122 of the processor 102 (7), and performs a process using the data (8).

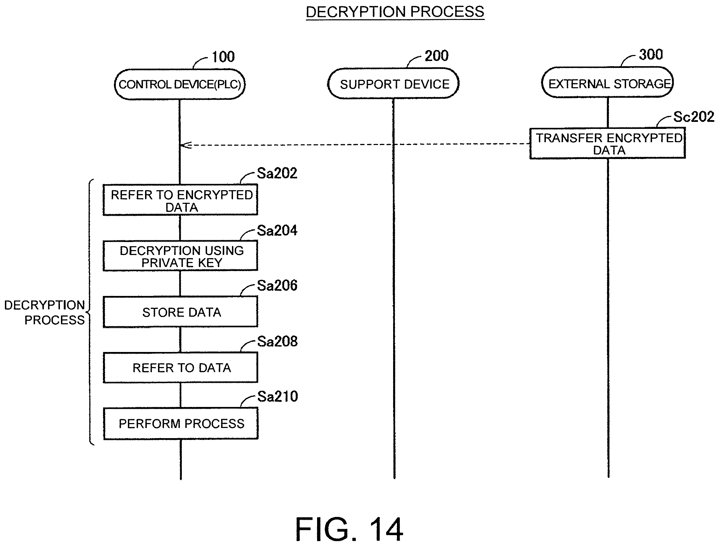

The decryption process described above is summarized in a sequence diagram shown in FIG. 14. FIG. 14 is a sequence diagram for explaining a decryption process of the control system 1 according to the present embodiment.

As shown in FIG. 14, the external storage 300 transfers the encrypted data to the control device 100 via the external interface 112 (Sc202). On the other hand, the control device 100 refers to encrypted data stored in the storage 106 or encrypted data transferred from the external storage 300 (Sa202).

The control device 100 decrypts the encrypted data using a private key among key pairs stored in the storage 106 (Sa204). Then, the control device 100 stores data obtained by decrypting in a volatile storage area of the main memory 104 (Sa206).

The control device 100 refers to data stored in the main memory 104 (Sa208), and performs a process using the data (Sa210).

In this manner, the control device 100 decrypts the encrypted data stored in the storage 106 and can use it for a process for controlling a control subject.

### (f6: Key exchange process)

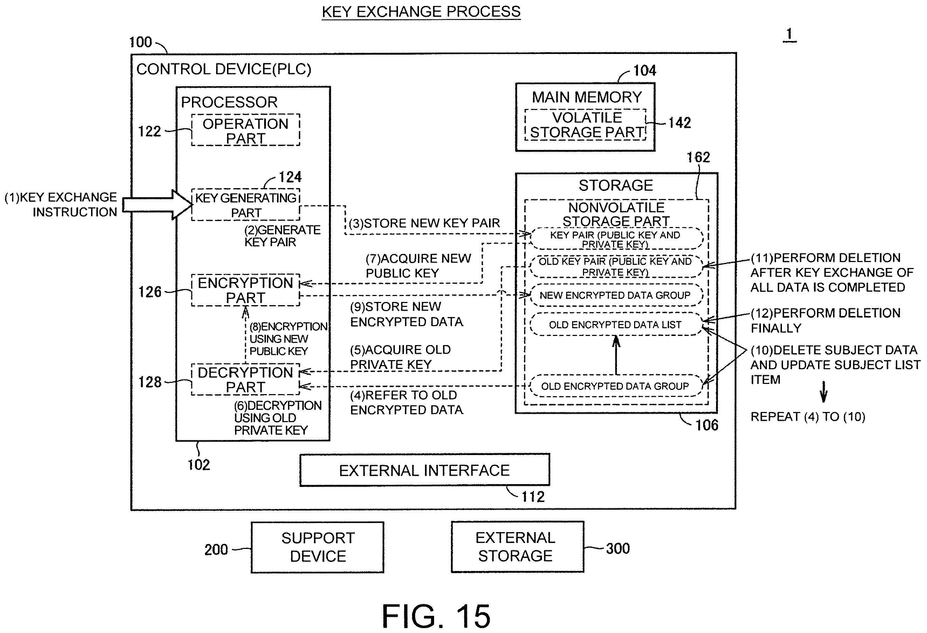

Next, a key exchange process according to the present embodiment will be described. FIG. 15 is a functional block diagram for explaining a key exchange process of the control system 1 according to the present embodiment.

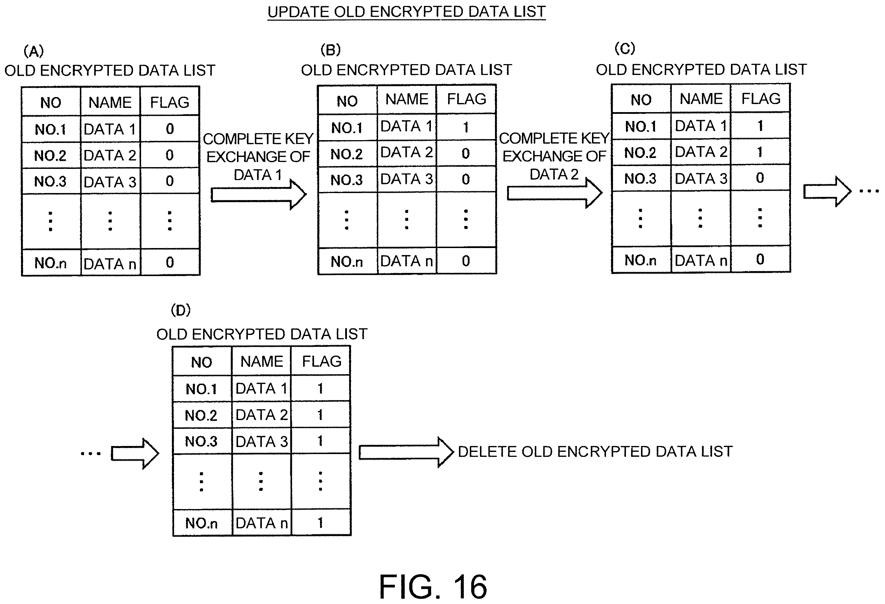

In the key exchange process, the control device 100 exchanges a key pair used for encryption and decryption of data that is provided from the support device. In addition, when a key exchange is performed, the control device 100 uses a list in order to know an operation progress of the key exchange. In the present embodiment, such a list is referred to as an "old encrypted data list." FIG. 16 includes diagrams (A) to (D) for explaining an example of updating an old encrypted data list in the control system 1 according to the present embodiment.

As shown in diagrams (A) to (D) of FIG. 16, in the old encrypted data list, as items corresponding to a plurality of encrypted data items, "NO," "name," and "flag" are summarized. In the column of "NO," a number assigned to each encrypted data item is stored. In the column of "name," a name of each encrypted data item is stored. In the column of "flag," information indicating whether a key is exchanged is stored, and "0" is stored before key exchange and "1" is stored after key exchange.

In the example shown in diagrams (A) to (D) of FIG. 16, items corresponding to n encrypted data items are summarized in the old encrypted data list. Such an old encrypted data list may be created in the key exchange process by the processor 102 of the control device 100, and may be created or updated in the encryption process by the processor 102 of the control device 100 whenever encrypted data is created.

Hereinafter, a key exchange process will be described with reference to an example of updating an old encrypted data list shown in diagrams (A) to (D) of FIG. 16 in addition to FIG. 15. Here, in the following description, a key pair before key exchange will be referred to as an old key pair (an old public key and an old private key), and a key pair after key exchange will be referred to as a new key pair (a new public key and a new private key).

As shown in FIG. 15, when the control device 100 receives an instruction to exchange a key (1) according to a user operation while an old key pair already exists in the storage 106, it generates a new key pair (2). Here, the generation of a new key pair is a process corresponding to generation of a key pair (2) after the process (1b) shown in FIG. 7.

When a new key pair is generated, the control device 100 stores a new key pair in the nonvolatile storage part 162 of the storage 106 (3).

The control device 100 refers to old encrypted data that is already stored in the storage 106 by the decryption part 128 of the processor 102 (4). For example, as shown in diagrams (A) to (D) of FIG. 16, encrypted data 1 corresponding to NO. 1 included in the old encrypted data list is referred to.

The control device 100 acquires an old private key of encrypted data 1 among old key pairs stored in the storage 106 by the decryption part 128 of the processor 102 (5). Then, the control device 100 decrypts old encrypted data 1 with the old private key (6). Here, when the control device 100 is operating and the encrypted data is already decrypted, the processes (4) to (6) may be omitted. In this manner, a time required for key exchange can be shortened.

The control device 100 acquires a new public key among new key pairs stored in the storage 106 by the encryption part 126 of the processor 102 (7). Then, the control device 100 encrypts data using the new public key by the encryption part 126 of the processor 102 (8).

The control device 100 stores new encrypted data obtained by encryption in a nonvolatile storage area by the nonvolatile storage part 162 of the storage 106 (9). In this manner, key exchange of the encrypted data 1 is completed.

When key exchange of the encrypted data 1 is completed, the control device 100 deletes the encrypted data 1, and updates items corresponding to the encrypted data 1 in the old encrypted data list (10). For example, as shown in diagrams (A) and (B) of FIG. 16, the "flag" corresponding to the encrypted data 1 with NO. 1 is updated from "0" to "1,"

Next, when there are a plurality of encrypted data items, the control device 100 performs the above processes (4) to (10) on encrypted data on which key exchange is not yet performed. Then, for example, as shown in diagrams (B) and (C) of FIG. 16, the "flag" corresponding to encrypted data 2 with NO. 2 is updated from "0" to "1." When the processes (4) to (10) are performed on all of the old encrypted data items stored in the old encrypted data list by the control device 100, as shown in diagram (D) of FIG. 16, the "flag" corresponding to all encrypted data is set to "1."

When key exchange of all old encrypted data is completed, the control device 100 deletes an old key pair (an old public key and an old private key) stored in the storage 106 (11), and also deletes the old encrypted data list (12).

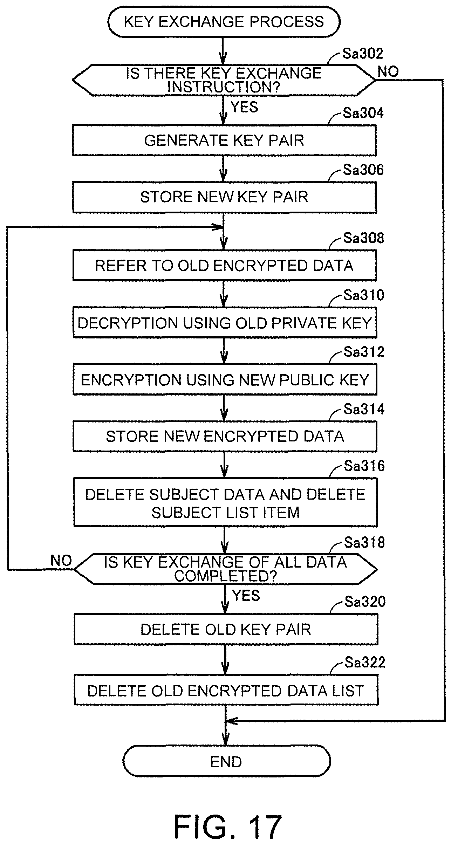

The above key exchange process is summarized in a flowchart shown in FIG. 17. FIG. 17 is a flowchart for explaining a key exchange process of the control device 100 according to the present embodiment.

As shown in FIG. 17, the control device 100 determines whether an instruction to exchange a key according to a user operation is received while an old key pair already exists in the storage 106 (Sa302). When a key exchange instruction is not received (NO in Sa302), the control device 100 ends the key exchange process.

On the other hand, when a key exchange instruction is received (YES in Sa302), the control device 100 newly generates a key pair (Sa304). Then, the control device 100 stores the new key pair in a nonvolatile storage area of the storage 106 (Sa306).

Next, the control device 100 refers to old encrypted data that is already stored in the storage 106 (Sa308). The control device 100 decrypts the old encrypted data using an old private key among old key pairs stored in the storage 106 (Sa310). Here, when the control device 100 is operating and the encrypted data is already decrypted, the processes (Sa308) and (Sa310) may be omitted. In this manner, a time required for key exchange can be shortened.

The control device 100 encrypts the data encrypted in the process Sa310 using a new public key among new key pairs stored in the storage 106 (Sa312). The control device 100 stores the new encrypted data obtained by encryption in a nonvolatile storage area of the storage 106 (Sa314).

When key exchange of one encrypted data item is completed, the control device 100 deletes the one encrypted data item and updates items corresponding to the one encrypted data item in the old encrypted data list (Sa316).

The control device 100 determines whether key exchange of all encrypted data is completed (Sa318). When key exchange of all encrypted data is not completed (NO in Sa318), the control device 100 again repeats the processes Sa308 to Sa316.

On the other hand, when key exchange of all encrypted data is completed (YES in Sa318), the control device 100 deletes an old key pair (an old public key and an old private key) stored in the storage 106 (Sa320), and also deletes the old encrypted data list (Sa322). Then, the control device 100 ends the key exchange process.

In this manner, the control device 100 can exchange a key pair of one or a plurality of encrypted data items stored in the storage 106.

As described above in the encryption process shown in FIG. 8 to FIG. 12, since data provided from the support device 200 is encrypted using a public key generated by the control device 100, it is possible to prevent data provided from the support device 200 from being leaked to the outside directly. In addition, as described in the decryption process shown in FIG. 13 and FIG. 14, when the control device 100 performs a process, since the control device 100 decrypts the encrypted data using a private key generated by the control device 100 and the control device 100 stores the decrypted data in an inaccessible volatile storage area, it is possible to prevent the decrypted data from being leaked to the outside.

As described in the encryption process according to the first embodiment shown in FIG. 8 and FIG. 9 and the encryption process according to the second embodiment shown in FIG. 10, since the control device 100 alone encrypts data provided from the support device 200, it is not necessary to transfer the public key generated by the control device 100 to the outside and it is possible to prevent leakage of data without complicating the processes.

As described in the encryption process according to the third embodiment shown in FIG. 11 and FIG. 12, since the support device 200 transfers data that is encrypted to the control device 100, it is possible to prevent data from being leaked along a transfer path, and it is possible to further strengthen prevention of data leakage.

In addition, since the control device 100 generates a private key and a public key using a value that varies depending on an environment in the control device 100 when a private key and a public key are generated, it is possible to further strengthen prevention of data leakage.

In addition, since a private key and a public key are generated using a factor that is a unique for each device and is not reproducible among a plurality of control devices in the same lot, it is possible to individually perform encryption different for each device and it is possible to further strengthen prevention of data leakage.

In particular, as in the encryption process according to the second embodiment shown in FIG. 10, when data created by a user using the support device 200 is stored in the external storage 600, there is a high possibility of data leakage. However, also in such a case, since data that is encrypted is stored in the external storage 600 and a private key for decryption is stored in the storage 106 that is not accessible from the outside in the control device 100, it is possible to prevent leakage of data.

As described in the key generation process shown in FIG. 7, when at least one of conditions including transfer of data from the outside, reception of an instruction from the outside, and activating of the control device 100 is satisfied, since the control device 100 generates a private key and a public key, the control device 100 can generate a private key and a public key at an appropriate timing.

As described in the key exchange process shown in FIG. 15 to FIG. 17, since the control device 100 can exchange a key pair used for encryption and decryption of data, it is possible to further strengthen prevention of data leakage.

In addition, in the key exchange process shown in FIG. 15 to FIG. 17, since the old encrypted data list is used, even if there is a large amount of data, the control device 100 can exchange a key pair without excess or deficiency. In addition, even if the key exchange is temporarily interrupted, since it is possible to confirm whether a key is exchanged with reference to the "flag" in the old encrypted data list, the control device 100 can exchange a key pair in a state during interruption even in an environmental site in which power supply is unstable.

### <H. Verification of data>

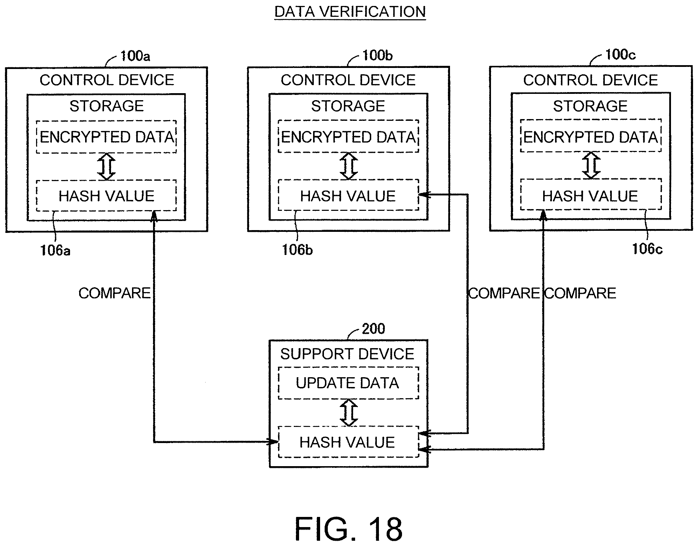

Next, data verification will be described. As in the present embodiment, when data that is encrypted is stored in the control device 100, it is difficult to verify the identity of data. Therefore, in the present embodiment, hash values for data (hereinafter referred to as "original data") described in plain text before encryption are compared, and thereby the identity is verified. Hereinafter, data verification using hash values for original data will be described with reference to FIG. 18.

FIG. 18 is a schematic diagram for explaining data verification in the control system 1 according to the present embodiment. In the example shown in FIG. 18, it is assumed that original data update is performed on the plurality of control devices 100 from the support device 200, and in the update process, original data corresponding to encrypted data stored in each control device 100 is compared with update data stored in the support device 200.

Specifically, the plurality of control devices 100a to 100c store hash values for original data in association with encrypted data in the storages 106a to 106c in advance. On the other hand, the support device 200 stores hash values for update data calculated using the same hash function as when hash values for original data are calculated. The support device 200 transfers the update data and the hash values to the control devices 100a to 100c.

Then, the control devices 100a to 100c compare the hash values for update data transferred from the support device 200 with the hash values for original data stored therein, and when both are the same, it is determined that data has already been updated, and original data is not updated, and when both are not the same, it is determined that data is not yet updated, and original data is updated.

In this manner, when the hash values associated with encrypted data are verified, since the control device 100 can verify data without decrypting encrypted data, a time required for verification can be shortened.

Here, execution of data verification is not limited to that of the control device 100. For example, hash values for original data are transferred from the control devices 100a to 100c to the support device 200, and the support device 200 may compare the hash values transferred from the control devices 100a to 100c with hash values for update data stored therein. Then, when both are not the same, the support device 200 may transfer update data to the target control device 100.

In addition, the control devices 100a to 100c may store a plurality of hash values for original data, and in this case, the plurality of hash values may be calculated by hash functions that are different from each other. When data is verified using a plurality of hash values, it is possible to reduce a collision frequency as low as possible.

### <1. Appendix>

As described above, the present embodiment includes the following disclosures.

### (Configuration 1)

A method of processing data that is provided from a support device (200) in a control device (100) configured to control a control subject, including:
a step (Sa2) of generating, using the control device, a private key and a public key;
a step (SalO and Sa104) of acquiring, using the control device, encrypted data obtained by encrypting the data using the public key;
a step (Sa204) of decrypting, using the control device, the encrypted data using the private key when the control device performs a process;
a step (Sa206) of storing, using the control device, the data obtained by decrypting the encrypted data using the private key in a volatile storage area that is not accessible from the outside; and
a step (Sa208 and Sa210) of executing, using the control device, a process with reference to the data stored in the storage area.

### (Configuration 2)

The data processing method according to configuration 1,
wherein the encrypted data is generated when the control device encrypts the data provided by the support device using the public key (Sa8), and
wherein the acquisition step includes acquiring the encrypted data transferred by the support device.

### (Configuration 3)

The data processing method according to configuration 1,
wherein the support device generates the encrypted data by encrypting the data using the public key (Sb102), and
wherein the acquisition step includes acquiring the encrypted data transferred by the support device.

### (Configuration 4)

The data processing method according to any one of configuration 1 to configuration 3,
wherein, when at least one of conditions including transfer of the data from the outside, reception of an instruction from the outside, and activation of the control device is established, the control device performs the generation step.

### (Configuration 5)

The data processing method according to any one of configuration 1 to configuration 4, including
a step (Sa304) of newly generating, using the control device, a new key pair including a private key and a public key when an old key pair including the public key and the private key are already stored;
a step (Sa310) of decrypting, using the control device, the encrypted data obtained by encryption using the public key of the old key pair using the private key of the old key pair;
a step (Sa312) of encrypting, using the control device, the data obtained by decryption using the private key of the old key pair using the public key of the new key pair;
a step (Sa314) of storing, using the control device, the encrypted data obtained by encryption using the public key of the new key pair; and
a step (Sa320) of deleting, using the control device, the old key pair.

### (Configuration 6)

The data processing method according to any one of configuration 1 to configuration 4, including,
a step (Sa304) of newly generating, using the control device, a new key pair including a private key and a public key when an old key pair including the public key and the private key are already stored;
a step (Sa310) of decrypting, using the control device, at least one encrypted data item among a plurality of encrypted data items obtained by encryption using the public key of the old key pair using the private key of the old key pair;
a step (Sa312) of encrypting, using the control device, the data obtained by decryption using the private key of the old key pair using the public key of the new key pair;
a step (Sa314) of storing, using the control device, the encrypted data obtained by encryption using the public key of the new key pair; and
a step (Sa320) of deleting, using the control device, the old key pair when all of the plurality of encrypted data items obtained by encryption using the public key of the old key pair are encrypted using the public key of the new key pair.

### (Configuration 7)

The data processing method according to configuration 6, including
a step (Sa316) of deleting, using the control device, an item corresponding to encrypted data obtained by encryption using the public key of the new key pair from a list in which items corresponding to the plurality of encrypted data items obtained by encryption using the public key of the old key pair are summarized; and
a step (Sa322) of deleting, using the control device, the list when all of the plurality of encrypted data items obtained by encryption using the public key of the old key pair are encrypted using the public key of the new key pair and thus all of the items are deleted.

### (Configuration 8)

The data processing method according to any one of configuration 1 to configuration 7,
wherein the control device generates the private key and the
public key using a value that varies depending on an environment in the control device when the private key and the public key are generated.

### (Configuration 9)

The data processing method according to any one of configuration 1 to configuration 8,
wherein the control device stores hash values for the data in association with the encrypted data corresponding to the data.

### (Configuration 10)

The data processing method according to any one of configuration 1 to configuration 9,
wherein the data is source code of a program with which the control device controls the control subject.

### (Configuration 11)

A control system (1) including a control device (100) configured to control a control subject and a support device (200) configured to provide data to the control device,
wherein the control device includes
a generation part (124) configured to generate a private key and a public key;
an acquisition part (112, 128) configured to acquire encrypted data obtained by encrypting the data using the public key;
a decryption part (128) configured to decrypt the encrypted data using the private key during processing;
a storage part (162) configured to store the data obtained by decryption using the private key for the encrypted data in a volatile storage area that is not accessible from the outside; and
an execution part (122) configured to perform a process with reference to the data stored in the storage area.

### (Configuration 12)

A control device (100) configured to control a control subject using data that is provided from a support device (200), including:
a generation part (124) configured to generate a private key and a public key;
an acquisition part (112, 128) configured to acquire encrypted data obtained by encrypting the data using the public key;
a decryption part (128) configured to decrypt the encrypted data using the private key during processing;
a storage part (162) configured to store the data obtained by decryption using the private key for the encrypted data in a volatile storage area that is not accessible from the outside; and
an execution part (122) configured to perform a process with reference to the data stored in the storage area.

### [Reference Signs List]

1 Control system
6 Host network
10 Device
12 Device
14 Relay group
16 I/O Part
18 Image sensor
20 Camera
22 Servo driver
24 Servo motor
97 Work area
98 Execution module
99 Program area
100, 100a, 100b, 100c Control device
102, 202 Processor
104 Main memory
106, 106a, 106c, 208 Storage
108 Host network controller
110 Field network controller
112 External interface
122 Operation part
124 Key generating part
126 Encryption part
128 Decryption part
130 Processor bus
142 Volatile storage part
162 Nonvolatile storage part
200 Support device
204 Optical drive
205 Recording medium
206 Main storage device
212 Controller
214 Network controller
216 Input part
218 Display part
220 Bus
230 Support program
234 Programming tool
300, 600 External storage
400 Display device
500 Server device

## Claims

1. A method of processing data that is provided from a support device (200) in a control device (100) configured to control a control subject, the data processing method **characterized by** comprising:
a generating step (Sa2), by using the control device (100), generating private key and a public key;
an acquiring step (Sa10, Sa104), by using the control device (100), acquiring encrypted data obtained by encrypting the data using the public key;
a step (Sa204) of decrypting, using the control device (100), the encrypted data using the private key when the control device (100) performs a process;
a step (Sa206) of storing, using the control device (100), the data obtained by decrypting the encrypted data using the private key in a volatile storage area that is not accessible from an outside; and
a step (Sa208, Sa210) of executing, using the control device (100), a process with reference to the data stored in the volatile storage area.

2. The data processing method according to claim 1,
wherein the encrypted data is generated when the control device (100) encrypts the data provided by the support device (200) using the public key (Sa8), and
wherein the acquiring step (SalO, Sa104) includes a step of acquiring the encrypted data generated by the control device (100).

3. The data processing method according to claim 1,
wherein the encrypted data is generated when the support device (200) encrypts the data using the public key (Sb102), and
wherein the acquiring step (Sa10, Sa104) includes acquiring the encrypted data transferred by the support device (200).

4. The data processing method according to any one of claims 1 to 3,
wherein, when at least one of conditions including transfer of the data from the outside, reception of an instruction from the outside, and activation of the control device (100) is established, the control device (100) performs the generating step (Sa2).

5. The data processing method according to any one of claims 1 to 4, comprising,
a step (Sa304) of newly generating, using the control device (100), a new key pair including a private key and a public key when an old key pair including the public key and the private key are already stored;
a step (Sa310) of decrypting, using the control device (100), the encrypted data obtained by encryption using the public key of the old key pair using the private key of the old key pair;
a step (Sa312) of encrypting, using the control device (100), the data obtained by decryption using the private key of the old key pair using the public key of the new key pair;
a step (Sa314) of storing, using the control device (100), the encrypted data obtained by encryption using the public key of the new key pair; and
a step (Sa320) of deleting, using the control device (100), the old key pair.

6. The data processing method according to any one of claims 1 to 4, comprising,
a step (Sa304) of newly generating, using the control device (100), a new key pair including a private key and a public key when an old key pair including the public key and the private key are already stored;
a step (Sa310) of decrypting, using the control device (100), at least one encrypted data item among a plurality of encrypted data items obtained by encryption using the public key of the old key pair using the private key of the old key pair;
a step (Sa312) of encrypting, using the control device (100), the data obtained by decryption using the private key of the old key pair using the public key of the new key pair;
a step (Sa314) of storing, using the control device (100), the encrypted data obtained by encryption using the public key of the new key pair; and
a step (Sa320) of deleting, using the control device (100), the old key pair when all of the plurality of encrypted data items obtained by encryption using the public key of the old key pair are encrypted using the public key of the new key pair.

7. The data processing method according to claim 6, comprising,
a step (Sa316) of deleting, using the control device (100), an item corresponding to encrypted data obtained by encryption using the public key of the new key pair from a list in which items corresponding to the plurality of encrypted data items obtained by encryption using the public key of the old key pair are summarized; and
a step (Sa322) of deleting, using the control device (100), the list when all of the plurality of encrypted data items obtained by encryption using the public key of the old key pair are encrypted using the public key of the new key pair and thus all of the items are deleted.

8. The data processing method according to any one of claims 1 to 7,
wherein the control device (100) generates the private key and the public key using a value that varies depending on an environment in the control device (100) when the private key and the public key are generated.

9. The data processing method according to any one of claims 1 to 8,
wherein the control device (100) stores hash values for the data in association with the encrypted data corresponding to the data.

10. The data processing method according to any one of claims 1 to 9,
wherein the data is source code of a program with which the control device (100) controls the control subject.

11. A control system (1) **characterized by** including a control device (100) configured to control a control subject and a support device (200) configured to provide data to the control device (100);
wherein the control device (100) includes
a generation part (124) configured to generate a private key and a public key;
an acquisition part (112, 128) configured to acquire encrypted data obtained by encrypting the data using the public key;
a decryption part (128) configured to decrypt the encrypted data using the private key during processing;
a storage part (162) configured to store the data obtained by decryption using the private key for the encrypted data in a volatile storage area that is not accessible from an outside; and
an execution part (122) configured to perform a process with reference to the data stored in the volatile storage area.

12. A control device (100) configured to control a control subject using data that is provided from a support device (200), **characterized by** comprising:
a generation part (124) configured to generate a private key and a public key;
an acquisition part (112, 128) configured to acquire encrypted data obtained by encrypting the data using the public key;
a decryption part (128) configured to decrypt the encrypted data using the private key during processing;
a storage part (162) configured to store the data obtained by decryption using the private key for the encrypted data in a volatile storage area that is not accessible from an outside; and
an execution part (122) configured to perform a process with reference to the data stored in the volatile storage area.
